# EUROPEAN PATENT SPECIFICATION

(11) **EP 2 506 605 B1**
(45) Date of publication and mention of the grant of the patent: **15.04.2020**
(21) Application number: 10791250.3
(22) Date of filing: 22.04.2010
(51) Int. Cl.: H04L 12/24, H04L 29/08, H04W 4/70

(54) **SERVICE MANAGEMENT SYSTEM AND METHOD BASED ON MACHINE TO MACHINE**
SERVICE MANAGEMENT SYSTEM UND VERFAHREN AUF GRUNDLAGE VON MACHINE TO MACHINE KOMMUNIKATION
SYSTÈME ET PROCÉDÉ DE GESTION DE SERVICE BASÉS SUR LA COMMUNICATION MACHINE TO MACHINE

(30) Priority: 11.12.2009 CN 200910254349
(43) Date of publication of application: 03.10.2012
(73) Proprietor: ZTE Corporation, Shenzhen, Guangdong 518057 (CN)
(72) Inventor: WANG, Peng, Shenzhen Guangdong 518057 (CN)
(74) Representative: Ligi, Stefano
(86) International application number: PCT/CN2010/072032
(87) International publication number: WO 2010/148744

(56) References cited:
- CN-A- 1 710 966
- CN-A- 1 798 139
- US-A- 5 870 667
- US-A1- 2009 089 078
- US-A1- 2009 100 178
- GUO YONGCAI ET AL.: 'The Design and realization of M2M terminal management Platform' CHINESE JOURNAL OF SCIENTIFIC INSTRUMENT vol. 29, no. 8, 31 August 2008, XP008160511

## Description

### TECHNICAL FIELD

The disclosure relates to communication technology, and more particularly to a system and method for service setting and management of Machine to Machine (M2M) terminal in the field of communications.

### BACKGROUND

With the emergence and development of communication network technology, the social life is greatly changed. People can communicate with each other faster, and the information exchange becomes smoother. However, at present, only computers and other IT equipments have such communication and network capability. Many common machines and equipments almost have no networking and communication capability, such as household electrical appliances, vehicles, vending machines and factory equipments. The goal of M2M technology is to make all the machines have networking and communication capability. The M2M technology has important significance, broad market prospect and application, thereby promoting a new round of social production and lifestyle changes.

M2M expresses the organic combination of various types of communication technologies: communication between machines; machine control communication; man-machine interactive communication; and mobile interconnection communication. M2M allows machines, equipments and application processes to share information with background information systems and operators. M2M provides a method of establishing wireless connection and transmitting data in real time between the systems, remote devices or/and individuals for the device. M2M technology integrates data acquisition, Global Positioning System (GPS), remote monitoring and telecommunication and information technology, which is an ecosystem of computers, networks, devices, sensors and human, and is capable of automatizing a service process, integrating real-time status of company information technology systems and non-IT equipments, and creating value-added services. Such a platform may be operated in environments such as safety monitoring, automatic meter reading, mechanical service and maintenance service, vending machine, public transport system, fleet management, industrial process automation, electric machinery and urban informationization, thereby providing broad application and solutions.

As a service management node of an M2M terminal, the M2M service management system has prominent function and value. In consideration of the current application status of M2M, the following defects will present if a set of service management platform is established for each M2M service:
1. when a terminal needs to change a service, the service management platform has to be changed; accordingly, the network data transmission, even the access parameter need to be adjusted;
2. addition and expansion of service are inflexible: both addition and expansion of service need the addition or update of the service platform, thereby resulting in obstacle for the stable operation of the service.

US 2009/100178 A1 discloses systems and methods that enable seamless access and control of hardware device resources through a common, device-independent interface without the need for device-specific drivers.

US 2009/089078 A1 discloses an enterprise geospatial intelligence service oriented architecture (EGI-SOA) which provides a consumer with one or more tailored products in response to either a dynamic request or a standing request by the consumer.

### SUMMARY

The technical problem to be solved by the disclosure is to provide a service management system and method based on M2M, so as to provide a M2M service platform in a more flexible manner.

The features of the system and method according to the present invention are defined in the independent claims, and the preferable features according to the present invention are defined in the dependent claims.

The disclosure adopts a unified service management system, in which the service can be flexibly loaded and changed as a unit of the management system, and the addition and expansion of the service is therefore fast and convenient. When the M2M terminal changes the service, the original access parameter or network information does not have to be adjusted, thereby switching the service seamlessly.

### BRIEF DESCRIPTION OF THE DRAWINGS

Fig. 1 shows a schematic view of a service management system based on M2M of an embodiment of the disclosure;
Fig. 2 shows a flowchart of a service management method based on M2M of an embodiment of the disclosure; and
Fig. 3 shows a schematic view of service loading process of an embodiment of the disclosure.

### DETAILED DESCRIPTION

The technical solution of the disclosure is further described in conjunction with the drawings and embodiments.

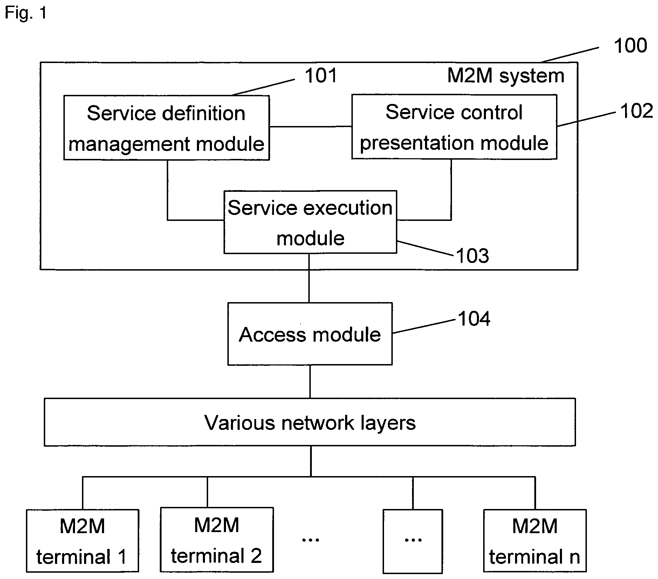

Fig. 1 shows a service management system 100 based on M2M of an embodiment of the disclosure, which includes a service definition management module 101, a service control presentation module 102 and a service execution module 103.

As shown in Fig. 1, the service management system 100 further includes an access module 104, which is connected with the service execution module 103 of the management system 100, for transmitting and interacting information between an access system and a terminal, and if necessary, further for executing part of basic functions, such as terminal registration, heartbeat detection and update management.

The service definition management module 101 is connected with the service execution module 103 and the service control presentation module 102, for configuring different services according to an M2M terminal accessed to the platform, and transmitting the service to the service execution module 103 and the service control presentation module 102. The service definition management module 101 is configured for establishing a service process, and determining specific information about type and version of a terminal using the service.

The service execution module 103 is connected with the service definition management module 101, the service control presentation module 102 and the access module 104, for receiving a defined service from the service definition management module 101, exchanging data and information with M2M terminal through the access module 104 and various network layers according to an instruction sent by the service control presentation module 102 to complete a specific service logic, and reserving related data for the service control presentation module 102 to present.

The service control presentation module 102 is connected with the service execution module 103 and the service definition management module 101, for receiving a control presentation rule of a specific service from the service definition management module 101, controlling the service execution module 103 to execute a specific service, and executing targeted presentation for the execution of specific service. The service control presentation module 102 implements a presentation of the specific service and a control of the specific terminal using the service. The control includes access control changing (such as terminal registration and terminal rejection) and terminal information transferring (such as designated terminal report, designated batch terminal report, designated terminal distribution and designated batch terminal distribution).

The basic technical idea of the service management system disclosed by the disclosure is to divide the service into a service execution logic part and a service control presentation part, and to process the two parts respectively; the service execution logic part is executed by the service execution module 103, while the service control presentation part is executed by the service control presentation module 102; the service execution module 103 and service control presentation module 102 are updated when the service is changed.

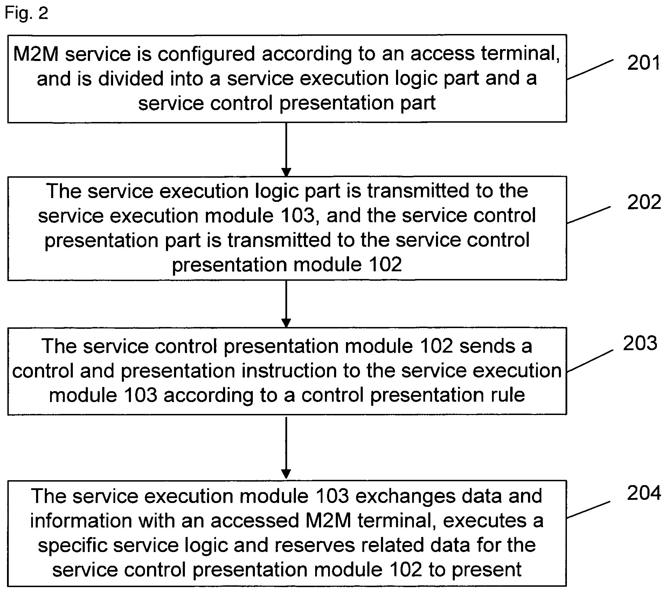

The disclosure further discloses a method for managing terminal service based on M2M, as shown in Fig. 2, which includes the following steps:
Step 201: The M2M service is configured according to an access terminal, and is divided into a service execution logic part and a service control presentation part.
Step 202: The service execution logic part is transmitted to the service execution module 103, and the service control presentation part is transmitted to the service control presentation module 102.
Step 203: The service control presentation module 102 sends a control and presentation instruction to the service execution module 103 according to a control presentation rule.
Step 204: The service execution module 103 exchanges data and information with the accessed M2M terminal according to the control and presentation instruction sent by the service control presentation module 102, executes a specific service logic and reserves related data for the service control presentation module to present.

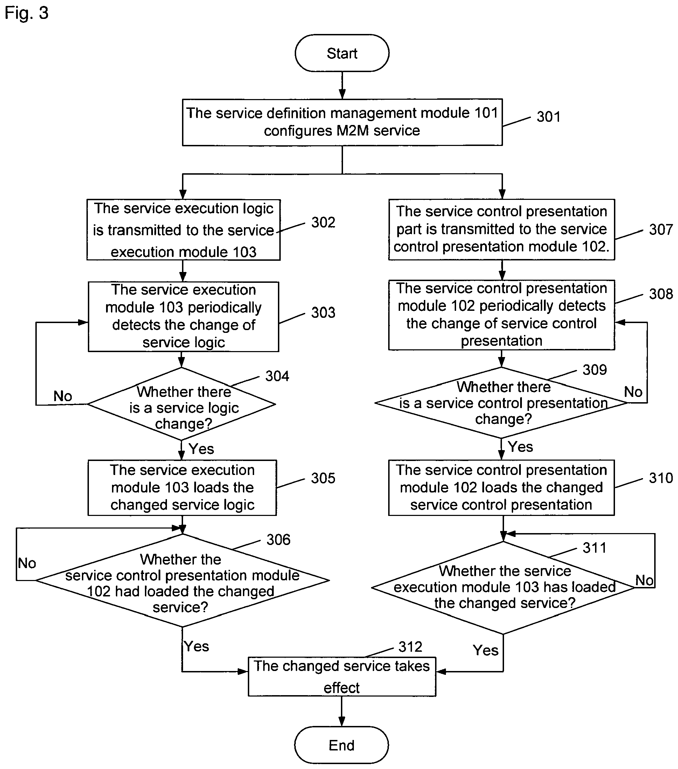

The embodiment of the disclosure is further described in conjunction with Fig. 3.

Firstly, the service definition module 101 configures M2M service (Step 301), divides the service into a service execution logic part and a service control presentation part. The service execution logic part is transmitted to the service execution module 103, and the service control presentation part is transmitted to the service control presentation module 102 (Steps 302 and 307). The service execution module 103 periodically detects whether there is a service logic change part, and when a changed service logic part is detected, loads the changed service logic part to the service execution module 103 (Steps 303, 304 and 305). The service control presentation module 102 periodically detects whether there is a changed service control presentation part, and when a changed service control presentation part is detected, loads the changed service control presentation part to the service control presentation module 102 (Steps 308, 309 and 310). After loading the changed service logic part, the service execution module 103 detects whether a control presentation part corresponding to the service is loaded by the service control presentation module 102 (Step 306), if not yet, keeps on waiting and detects periodically, if loaded, takes the changed service into effect (Step 312). After loading the changed service control presentation part, the service control presentation module 102 detects whether a service logic part of the service is loaded by the service execution module 103 (Step 311), if not yet, keeps on waiting and detects periodically, if loaded, takes the changed service into effect (Step 312).

The system is described in detail in conjunction with an embodiment in the following:
1) a terminal of type A has short message service (SMS) and GPS capabilities;
2) a road conditions real-time alarm service S is established in the service definition management module 101:
   a) the terminal of type A registers service S;
   b) a service logic part of S requires the terminal to report periodically GPS location information, and may be able to send SMS to the terminal; and
   c) a control presentation part of S presents the location information of the terminal, and may inform the terminal by SMS;
3) the service logic part and control presentation part are reported to corresponding modules after the service is completed, and then the service is activated; and
4) when a platform operator detects abnormal conditions such as an accident or a traffic jam occurred on a route where a terminal is located, the operator sends the abnormalities to a corresponding terminal actively, so that the terminal using the service may obtain the traffic information in real time.

## Claims

1. A system (100) for service setting and management of a Machine to Machine, M2M, terminal, **characterized in that** the system comprises a service definition management module (101), a service execution module (103) and a service control presentation module (102), wherein:
the service definition management module (101) is configured to configure M2M service according to an access terminal, and divide the service into a service execution logic part and a service control presentation part;
the service control presentation module (102) is configured to receive the service control presentation part from the service definition management module (101) to present, and send a control instruction to the service execution module (103) according to a control presentation rule; and
the service execution module (103) is configured to receive the service execution logic part from the service definition management module (101), exchange data and information with an M2M terminal according to the control instruction sent by the service control presentation module, execute a specific service logic, and reserve related data for the service control presentation module to present.

2. The system according to claim 1, wherein the service execution module (103) is further configured to periodically detect whether there is a service logic change part, and when a changed service logic part is detected, loading the changed service logic part to the service execution module (103).

3. The system according to claim 1, wherein the service control presentation module (102) is further configured to periodically detect whether there is a changed service control presentation part, and when a changed service control presentation part is detected, loading the changed service control presentation part to the service control presentation module (102).

4. The system according to claim 2, wherein after loading the changed service logic part, the service execution module (103) is further configured to detect whether a control presentation part corresponding to the service is loaded by the service control presentation module (102), if not yet, keep on waiting and detect periodically; if loaded, take the changed service into effect.

5. The system according to claim 3, wherein after loading the changed service control presentation part, the service control presentation module (102) is further configured to detect whether a service logic part corresponding to the service is loaded by the service execution module (103), if not yet, keep on waiting and detect periodically; if loaded, take the changed service into effect.

6. A method for service setting and management of a Machine to Machine, M2M, terminal, **characterized in that** the method comprises:
configuring (201), by a service definition management module (101), an M2M service according to an access terminal, and dividing the service into a service execution logic part and a service control presentation part;
transmitting (202) the service execution logic part to a service execution module (103), and transmitting the service control presentation part to a service control presentation module (102);
sending (203), by the service control presentation module (102), a control instruction to the service execution module (103) according to a control presentation rule; and
exchanging (204), by the service execution module (103), data and information with an accessed M2M terminal according to the control instruction sent by the service control presentation module (102), executing a specific service logic and reserving related data for the service control presentation module (102) to present.

7. The method according to claim 6, further comprising: periodically detecting (303), by the service execution module (103), whether there is a service logic change part, and when a changed service logic part is detected, loading (305) the changed service logic part to the service execution module (103).

8. The method according to claim 6, further comprising: periodically detecting (308), by the service control presentation module (102), whether there is a changed service control presentation part, when a changed service control presentation part is detected, loading (310) the changed service control presentation part to the service control presentation module (102).

9. The method according to claim 7, further comprising: detecting (306), by the service execution module (103), after loading the changed service logic part, whether a control presentation part corresponding to the service is loaded by the service control presentation module (102), if not yet, keeping on waiting and detecting periodically; if loaded, taking (312) the changed service into effect.

10. The method according to claim 8, further comprising: detecting (311), by the service control presentation module (102), after loading the changed service control presentation part, whether a service logic part corresponding to the service is loaded by the service execution module (103), if not yet, keeping on waiting and detecting periodically; if loaded, taking (312) the changed service into effect.

## Patentansprüche

1. System (100) zur Diensteinstellung und -verwaltung eines Maschine-zu-Maschine, M2M,-Endgeräts, **dadurch gekennzeichnet, dass** das System ein Dienstdefinitionsverwaltungsmodul (101), ein Dienstdurchführungsmodul (103) und ein Dienststeuerungspräsentationsmodul (102) umfasst, worin:
das Dienstdefinitionsverwaltungsmodul (101) dafür ausgelegt ist, einen M2M-Dienst gemäß einem Zugriffsendgerät zu konfigurieren und den Dienst in einen Dienstdurchführungslogikteil und einen Dienststeuerungspräsentationsteil zu teilen;
das Dienststeuerungspräsentationsmodul (102) dafür ausgelegt ist, den Dienststeuerungspräsentationsteil vom Dienstdefinitionsverwaltungsmodul (101) zur Präsentation zu empfangen und eine Steuerungsanweisung an das Dienstdurchführungsmodul (103) gemäß einer Steuerungspräsentationsregel zu senden; und
das Dienstdurchführungsmodul (103) dafür ausgelegt ist, den Dienstdurchführungslogikteil vom Dienstdefinitionsverwaltungsmodul (101) zu empfangen, Daten und Informationen mit einem M2M-Endgerät gemäß der Steuerungsanweisung, die vom Dienststeuerungspräsentationsmodul gesandt wurde, auszutauschen, eine spezifische Dienstlogik durchzuführen und zugehörige Daten für das Dienststeuerungspräsentationsmodul zur Präsentation zu reservieren.

2. System nach Anspruch 1, worin das Dienstdurchführungsmodul (103) ferner dafür ausgelegt ist, periodisch zu ermitteln, ob es einen Dienstlogikänderungsteil gibt, und wenn ein geänderter Dienstlogikteil ermittelt wird, den geänderten Dienstlogikteil im Dienstdurchführungsmodul (103) zu laden.

3. System nach Anspruch 1, worin das Dienststeuerungspräsentationsmodul (102) ferner dafür ausgelegt ist, periodisch zu ermitteln, ob es einen geänderten Dienststeuerungspräsentationsteil gibt, und wenn ein geänderter Dienststeuerungspräsentationsteil ermittelt wird, den geänderten Dienststeuerungspräsentationsteil im Dienststeuerungspräsentationsmodul (102) zu laden.

4. System nach Anspruch 2, worin nach dem Laden des geänderten Dienstlogikteils das Dienstdurchführungsmodul (103) ferner dafür ausgelegt ist, zu ermitteln, ob ein Steuerungspräsentationsteil, der dem Dienst entspricht, vom Dienststeuerungspräsentationsmodul (102) geladen wird, wenn dies noch nicht erfolgt ist, weiterhin zu warten und periodisch zu ermitteln; wenn er geladen ist, den geänderten Dienst zur Wirkung zu bringen.

5. System nach Anspruch 3, worin nach dem Laden des geänderten Dienststeuerungspräsentationsteils das Dienststeuerungspräsentationsmodul (102) ferner dafür ausgelegt ist, zu ermitteln, ob ein Dienstlogikteil, der dem Dienst entspricht, vom Dienstdurchführungsmodul (103) geladen wird, wenn dies noch nicht erfolgt ist, weiterhin zu warten und periodisch zu ermitteln; wenn er geladen ist, den geänderten Dienst zur Wirkung zu bringen.

6. Verfahren zur Diensteinstellung und -verwaltung eines Maschine-zu-Maschine, M2M,-Endgeräts, **dadurch gekennzeichnet, dass** das Verfahren umfasst:
Konfigurieren (201), durch ein Dienstdefinitionsverwaltungsmodul (101), eines M2M-Dienstes gemäß einem Zugriffsendgerät und Teilen des Dienstes in einen Dienstdurchführungslogikteil und einen Dienststeuerungspräsentationsteil;
Übermitteln (202) des Dienstdurchführungslogikteils an ein Dienstdurchführungsmodul (103) und Übermitteln des Dienststeuerungspräsentationsteils an ein Dienststeuerungspräsentationsmodul (102);
Senden (203), durch das Dienststeuerungspräsentationsmodul (102), einer Steuerungsanweisung an das Dienstdurchführungsmodul (103) gemäß einer Steuerungspräsentationsregel; und
Austauschen (204), durch das Dienstdurchführungsmodul (103), von Daten und Informationen mit einem zugegriffenen M2M-Endgerät gemäß der Steuerungsanweisung, die vom Dienststeuerungspräsentationsmodul (102) gesandt wurde, Durchführen einer spezifischen Dienstlogik und Reservieren von zugehörigen Daten für das Dienststeuerungspräsentationsmodul (102) zur Präsentation.

7. Verfahren nach Anspruch 6, ferner umfassend: periodisches Ermitteln (303), durch das Dienstdurchführungsmodul (103), ob es einen Dienstlogikänderungsteil gibt, und wenn ein geänderter Dienstlogikteil ermittelt wird, Laden (305) des geänderten Dienstlogikteils im Dienstdurchführungsmodul (103).

8. Verfahren nach Anspruch 6, ferner umfassend: periodisches Ermitteln (308), durch das Dienststeuerungspräsentationsmodul (102), ob es einen geänderten Dienststeuerungspräsentationsteil gibt, und wenn ein geänderter Dienststeuerungspräsentationsteil ermittelt wird, Laden (310) des geänderten Dienststeuerungspräsentationsteils im Dienststeuerungspräsentationsmodul (102).

9. Verfahren nach Anspruch 7, ferner umfassend: Ermitteln (306), durch das Dienstdurchführungsmodul (103), nach dem Laden des geänderten Dienstlogikteils, ob ein Steuerungspräsentationsteil, der dem Dienst entspricht, vom Dienststeuerungspräsentationsmodul (102) geladen wird, wenn dies noch nicht erfolgt ist, weiterhin Warten und periodisches Ermitteln; wenn er geladen ist, Bringen (312) des geänderten Dienstes zur Wirkung.

10. Verfahren nach Anspruch 8, ferner umfassend: Ermitteln (311), durch das Dienststeuerungspräsentationsmodul (102), nach dem Laden des geänderten Dienststeuerungspräsentationsteils, ob ein Dienstlogikteil, der dem Dienst entspricht, vom Dienstdurchführungsmodul (103) geladen wird, wenn dies noch nicht erfolgt ist, weiterhin Warten und periodisches Ermitteln; wenn er geladen ist, Bringen (312) des geänderten Dienstes zur Wirkung.

## Revendications

1. Système (100) de configuration et gestion de service d'un terminal Machine à Machine, M2M, **caractérisé en ce que** le système comprend un module de gestion de définition de service (101), un module d'exécution de service (103) et un module de présentation de contrôle de service (102), où :
le module de gestion de définition de service (101) est configuré pour configurer le service M2M selon un terminal d'accès et diviser le service dans une partie logique d'exécution de service et une partie de présentation de contrôle de service ;
le module de présentation de contrôle de service (102) est configuré pour recevoir la partie de présentation de contrôle de service du module de gestion de définition de service (101) pour présenter et envoyer une instruction de contrôle au module d'exécution de service (103) selon une règle de présentation de contrôle ; et
le module d'exécution de service (103) est configuré pour recevoir la partie logique d'exécution de service du module de gestion de définition de service (101), échanger des données et des informations avec un terminal M2M conformément à l'instruction de contrôle envoyée par le module de présentation de contrôle de service, exécuter une logique de service spécifique, et réserve des données associées pour le module de présentation de contrôle de service à présenter.

2. Système selon la revendication 1, où le module d'exécution de service (103) est en outre configuré pour détecter périodiquement s'il y a une partie de modification de logique de service, et lorsqu'une partie de logique de service modifiée est détectée, charger la partie logique de service modifiée sur le module d'exécution de service (103).

3. Système selon la revendication 1, où le module de présentation de contrôle de service (102) est en outre configuré pour détecter périodiquement s'il y a une partie de présentation de contrôle de service modifiée, et lorsqu'une partie de présentation de contrôle de service modifiée est détectée, charger la partie de présentation de contrôle de service modifiée sur le module de présentation de contrôle de service (102).

4. Système selon la revendication 2, où, après le chargement de la partie logique de service modifiée, le module d'exécution de service (103) est en outre configuré pour détecter si une partie de présentation de contrôle correspondant au service est chargée par le module de présentation de contrôle de service (102), sinon, continuer à attendre et détecter périodiquement ; si elle est chargée, prendre en compte le service modifié.

5. Système selon la revendication 3, où après le chargement de la partie de présentation de contrôle de service modifiée, le module de présentation de contrôle de service (102) est en outre configuré pour détecter si une partie logique de service correspondant au service est chargée par le module d'exécution de service (103), sinon, continuer à attendre et détecter périodiquement ; si elle est chargée, prendre en compte le service modifié.

6. Méthode de configuration et gestion de service d'un terminal Machine à Machine, M2M, **caractérisée en ce que** la méthode comprend :
la configuration (201) par un module de gestion de définition de service (101), d'un service M2M selon un terminal d'accès et la division du service dans une partie logique d'exécution de service et une partie de présentation de contrôle de service ;
la transmission (202) de la partie logique d'exécution de service à un module d'exécution de service (103), et transmission de la partie de présentation de contrôle de service à un module de présentation de contrôle de service (102) ;
l'envoi (203), par le module de présentation de contrôle de service (102), d'une instruction de contrôle au module d'exécution de service (103) selon une règle de présentation de contrôle ; et
le changement (204), par le module d'exécution de service (103), des données et des informations avec un terminal M2M accédé conformément à l'instruction de contrôle envoyée par le module de présentation de contrôle de service (102), l'exécution d'une logique de service spécifique et la réservation des données associées pour le module de présentation de contrôle de service (102) à présenter.

7. Méthode selon la revendication 6, comprenant en outre : la détection (303) périodique par le module d'exécution de service (103) s'il y a une partie de modification de logique de service, et lorsqu'une partie de logique de service modifiée est détectée, le chargement (305) de la partie logique de service modifiée sur le module d'exécution de service (103).

8. Méthode selon la revendication 6, comprenant en outre : la détection périodique (308), par le module de présentation de contrôle de service (102) s'il y a une partie de présentation de contrôle de service modifiée, lorsqu'une partie de présentation de contrôle de service modifiée est détectée, le chargement (310) de la partie de présentation de contrôle de service modifiée sur le module de présentation de contrôle de service (102).

9. Méthode selon la revendication 7, comprenant en outre : la détection (306), par le module d'exécution de service (103), après le chargement de la partie logique de service modifiée, si une partie de présentation de contrôle correspondant au service est chargée par le module de présentation de contrôle de service (102), sinon, la continuation de l'attendre et la détection périodique ; si elle est chargée, la prise en compte (312) du service modifié.

10. Méthode selon la revendication 8, comprenant en outre : la détection (311) par le module de présentation de contrôle de service (102), après le chargement de la partie de présentation de contrôle de service modifiée, si une partie logique de service correspondant au service est chargée par le module d'exécution de service (103), sinon, la continuation de l'attendre et la détection périodique ; si elle est chargée, la prise en compte (312) du service modifié.
